Europäisches Patentamt

European Patent Office

Office européen des brevets

(11) Publication number: **0 556 537 A1**

## EUROPEAN PATENT APPLICATION

(21) Application number: **92830350.2**

(22) Date of filing: **03.07.92**

(30) Priority: **18.02.92 IT MI920343**

(43) Date of publication of application:
**25.08.93 Bulletin 93/34**

(84) Designated Contracting States:
**AT BE CH DE DK ES FR GB GR IT LI LU MC
NL PT SE**

(51) Int. Cl.⁵: **C08K 3/22**, C08K 5/14

(71) Applicant: **MANIFATTURA TUBI GOMMA S.p.A.
Via Pigafetta
I-36040 Grisignano di Zocco (Vicenza)(IT)**

(72) Inventor: **Marcolin, Pietro
Via Biancolin 17
Carrara S. Stefano (Padova)(IT)**
Inventor: **Lomazzi, Piercarlo
Via S. Matteo 8
Tencarola di Selvazzano (Padova)(IT)**

(74) Representative: **Righetti, Giuseppe
Bugnion S.p.A. Via Carlo Farini, 81
I-20159 Milano (IT)**

(54) **Thermoplastic pipe and use thereof.**

㋙ A thermoplastic moulding composition suitable as non-toxic protection of cables, in particular as mechanical protection of electric cables installed on railway, tramway and underground carriages, comprising a selected ethylene copolymer, a flame-retardant and incombustible agent, and the usual plasticizers, antioxidants, anti-aging agents, fillers and promoters.

Rank Xerox (UK) Business Services
(3. 10/3.6/3.3. 1)

This invention relates to thermoplastic pipes comprising, further to usual additives and adjuvants, a particular ethylene copolymer and a high level of a fire retardant and incombustible compound, to a process for their preparation and to their use for protecting cables, for the passage of industrial and waste waters and, in particular, for protecting cables of every type, specifically for the mechanical protection of electric cables installed on railway, tramway and underground carriages.

It is known that the thermoplastic compositions recipe, obviously different according to their desired end use. provides usually the presence of many essential ingredients, the task of which is more or less indispensable, and of other components for the different particular uses. A general composition thus consists generally of:

a) one or more elastomer,

b) curing agents (usually cross-linkers, accelerators, promoters, eventually retarders),

c) plasticizers,

d) fillers (reinforcers or inerts, the latters known also as extenders or hardeners),

e) anti-aging agents (or antioxidants, better anti-deterioration agents).

Moreover, for example dyes, deodorants or perfumes, regenerates, substitutes, bulking agents and the like may be present. Generally, the composition is referred to 100 parts of elastomeric polymer or copolymer.

It is further known that presently the rubber flexible pipes with textile inclusion, used as mechanical protection for electrical cables installed on railway. tramway and underground carriages, have to meet many essential requirements. In particular, they should be fire-resistant, not flame spreading and should grant a suitable evolution of dull fumes and caustic, toxic gases.

The pipes able thus to meet these requirements, and manufactured as perfectly tight, should have uniform diameter, regular and reasonably concentric surface without holes, protrusions, crackings, stains or other surface defects; they further should not reveal noticeable separations between the rubber layers and the textile insertion or other clear defects due to their manufacturing process.

In detail, a pipe suitable for the above mentioned uses should exhibit a good flexibility and be elastic, its inner surface should be smooth and with cloth well clear outside, and it should meet the operating conditions while retaining its characteristics at a temperature of from -30 to 80°C. It is also preferable that the sublayer and top rubber be of the same material, and that the inclusion comprises a high resistant cloth woven with rayon fibres.

To meat the operating conditions, the rubber employed for obtaining the pipes should moreover possess adequate mechanical and dielectric properties, and further exhibit a good resistance to:

- weather (sunlight, inclemency, oxygen, ozone, industrial waste gases, eventually saline medium), and
- eventual lubrificant sprinklings (mineral and silicone oils and fats), fuels (naphtha, gas oil), sewage arising from railroad cars toilets.

It is also known that on electrical cables many different insulant coatings are applied. Only for illustrative purpose, one can mention soaked paper in the form of 10-30/100 mm tapes wound around the conductive cable, polyvinyl chloride, polyethylene, butyl rubber, magnesium and the like.

Presently, for preparing pipes having the above mentioned characteristics thermoplastic resins are employed. With this term macromolecular products are meant, which are obtained by polimerization of a basic molecule showing a generally unsatured straucture.

The polymer molecule appears as being a linear chain consisting of sequences of the same monomer. Said linear structure provides the thermoplastic resins with fusibility properties under heat and pressure action, as well as different solubility characteristics. Said resins, also known as polymerization resins, can be molded or hot formed, but they retain a rigid structure only when extracted after their cooling. On the other hand, the processing wastes may be eventually recycled for further operations.

Almost all the first comercially available resins were of the vinylic type, as the starting monomer was characterized by a double bond in the molecule. Afterwards, other resins appeared on the market, for example polyvinyl acetate, high density polyethylene, polypropilene, and further resins, all of the vinylic type. Some copolymers were prepared starting from a suitable blend of two or three monomers in order to conjugate the better characteristics of every component: EVA (ethylene-vinyl acetate), AS (acrylonitrile-styrene), ABS (acrylonitrile-butadiene-styrene) and the like. Said resins are very suitable for their processability by extrusion, so as to obtain for example pipings, electrical pipes, industrial profilates, agricultural films or foils, and the like. With thermoplastic materials, foils and plates having different dimensions and properties can be prepared, utilizing for example cast, calender and molding techniques.

Even though said thermoplastic resins were already known, many attempts were made to add to them further additives and adjuvants in order to stress the final properties of the article that is to be obtained. Because of the many thermoplastic resins and the different ingredients range, it is obvious that the composition recipe constitutes a basilar element both under the economic and the qualitative point of view, in that it enables to solve specific application problems by means of suitable even different formulations.

Presently, the pipes suitable for the purposes mentioned above are manufactures from the thermoplastic resins to which the most suitable adjuvants are added, but all the attempts to obtain endproducts meeting all the desired requirements failed poorly.

Thus in EP-B-169069 a heat resistant, thermoplastic composition suitable as insulant material for cables is described, comprising a) a cross-linkable thermoplastic component, b) a fluorocarbon component and c) a catalyst. The thermoplastic component may be a ethylene/vinyl acetate copolymer, but an unsatured silane compound is grafted thereon.

From IT-A-1185484 an electric cable with coating acting as insulant and/or sheath is known, said sheath being on the basis of ethylene copolymers and containing as filler a crystalline magnesium hydroxide powder.

In IT-A-1139567 a material for insulants and sheaths of electric cables is described, said material comprising a blend of elastomeric material in which as component chromic anhydride is present. The presence of magnesium hydroxide as filler in the blend of ethylene copolymers is also described in IT-A-1153115.

All the materials described in the prior art exhibit however many disadvantages, as evolution of noxious fumes and poor adaptability to the performance actually requested to the pipes for protecting cables.

Object of the present invention is to provide an improved moulding composition based on a thermoplastic resin, from which a pipe for protecting cables of every type and for the passage of industrial and waste waters, above all as mechanical protection for electric cables installed on railway, tramway and underground carriage, could be obtained, said pipe showing high flexibility and elasticity, not having surface defects, not being able to spread flame and granting a low or no evolution of dull fumes and toxic gases.

Said object has been surprisingly attained by means of a new composition based on a thermopalstic resin in which a very high level of an additive able to improve both the mechanical and physical properties has been inserted, in particular high current voltage and thus fire strength.

The present invention provide therefore a moulding thermoplastic composition comprising a particular ethylene copolymer, a high level of a fire-retardant and incombustible substance and, for balance, the usual antioxidant and anti-aging agents, plasticizers and promoters, a process for its preparation and its use for preparing pipes to employ for protecting cables, for passage of industrial and waste waters, in particular as mechanical protection for electric cables installed on railway, tramway and underground carriages.

The thermoplastic resin employed as basic material for the present composition is an EVA (ethylene-vinyl acetate) copolymer. It is a copolymer with a vinyl acetate content of 45% by weight, prepared by emulsion polymerization and is supplied in granular form, dusted with talcum and Wessalon (trade name). EVA is soluble in toluene, has a density of about 0,99 g/cm3 and a melt flow index (MFI) according DIN 53735 of 5g/10 min (MFI 190°C/2,16 kp). It is present in the composition in an amount of from 20 to 70% by weight, based on composition total weight.

As fire retardant agent an hydroxide of a bivalent or trivalent metal selected from magnesium hydroxide and aluminium hydroxide was employed, alone or in admixture thereof. Better results were obtained with alluminium hydroxide alone.

Its amount in the composition ranges from 30 and 80% by weight, based on the composition total weight.

As mentioned above, to the composition of the present invention many other additives, as reinforcing fillers, plasticizers, anti-aging and antioxidant agents have been added. As antioxidant, any substance usually employed in thermoplastic resins field can be used, and the same is worth for the anti-aging, promoter and plasticizer. Logically, this invention is not restricted to a particular additive or adjuvant, in that all the known agents having the same activity or function can be used, without compromising the end characteristics of the product. For example, instead of carbon black as filler thus fine silica could be employed, then precipitated calcium carbonates, calcium silicates, alluminium silicates, titanium dioxide and zinc oxide, etc. Very good results have attained adding cumyl peroxide.

The amounts of these additives are not strictly limited and, for 100 parts of the composition, they are: 0.1-1.5% for antioxidant, 0.05-1.0% for anti-aging agent, 1-8% for filler, 0.05-1.2% for promoter and 0.07-3% for cumyl peroxide.

Working of the composition object of the present invention must be carried out at a temperature lower than 120°C and for a very short period of time, usually few minutes. It is suitable to employ cooled devices so as to remove the heating evolved in the reaction. As to the other conditions, working takes place as usual for the thermoplastic resins.

3

The following example is furnished for illustrative purpose only and not for limiting in any way the scope of the present invention.

EXAMPLE

In a Banbury mixer the following ingredients were charged:
35 kg of EVA copolymer
55 kg of aluminium hydroxide
0.630 kg of 2.2.2-trimethyl-1.2-dihydroquinoline (as antioxidant),
0.420 kg of a 50:50 polycarbodiimide-EVA mixture (as anti-aging agent),
1.400 kg of carbon black
0.400 kg of triethoxypropyl tetrasulfide silane (as promoter),
1.600 kg of dimethypolysiloxane (as plasticizer),
0.752 kg of cumyl peroxide (as filler).

The hot mixture was immediately trasnferred on upper rolls of a calender, cooled so as to maintain the temperature at 10°C, and thus the foil shaping begins. Said foil, after two or three passages between the rolls (normally four) arranged at suitable distance, will reach the desired thickness and, at the same time, a glossy appearance. During the last passage the resin joined the rayon fabric unrolling from an additional roll. Adhesion is quite good and is due to the fabric coupling to the resin, while this, still warm, is in high plasticity conditions and grasped strongly the fibers. The foil was then wrapped around a mandrel, which was later unthreaded once the hardening is ended. The end pipe comprised a rubber layer, a rayon layer and at least a further rubber coating.

A similar product was obtained if part of aluminium hydroxide was replaced with magnesium hydroxide.

On the finished pipe several tests were carried out in order to establish characteristics and properties thereof, and the results thus obtained are listed here below.

a) Surface electric voltage test

The test was carried out according to the UNI 4643 rules. Once the seal at 15 kV has bean established, the voltage was increased at a rate of about 1kV/sec, until a maximum voltage of 36 kV was reached, in order to establish the surface breakdown voltage. The obtained results are listed in Table 1.

## TABLE 1

| Sample | dry | wet | D (mm) | | result | breakdown |
| | | | in. | out. | | voltage |
| | x | x | 28 | 33 | positive | >33 |

b) Through wall electric voltage test

The test was carried out according to UNI 4644 rules. The test gradient value was set at 5 kV/mm. The obtained results are listed in Table 2.

## TABLE 2

| Sample | D (mm) | | Voltage | Result | puncture |
| | in. | out. | (kV) | | volt. kV |
| | 28 | 33 | 12.5 | pos. | 26 |

c) Flame propagation

The test was carried out with a cured rubber 200x200x4 mm strip. From said strip, 175x12.7x4mm coupons vertically arranged were obtained, and a bunsen flame was applied thereon having a 38 mm height according to ASTM C 542 point 8.8. When the test was over, after flame removal neither flame propagation nor incandescence were noticed.

Coupons average length before the test: 175 mm
Coupons average length after the test: 95 mm
d) Toxicity and corrosion test
A sheath cut-down size was examined at the following conditions:

|  | Part 1 | Part 2 |
|---|---|---|
| Fire point<br>Burning time<br>Air flow | 20°C/min to 800°C; 20 min at 800°C +/-10°C<br>1 hr<br>110 cm3/min | 800°C +/-10°C.<br>20 min<br>120 l/hr |

The obtained results are listed in Table 3. Analysis and identification of the combustion gas products were carried out by gas chromatographic, spectrophotometric, UV methods, with iono-sensible electrodes and by chemiluminescence. Said analyses were carried out based oil the combustion of about 1 g samples inside a suitable oven.

In this way the amounts - ppm - of twelve (12) gas which contribute to furnish the toxicity index value (carbon dioxide, carbon monoxide, hydrochloric, hydrobromic, hydrofluoric, and hydrocyanic acid, hydrogen sulfide, sulfur dioxide, nitric oxide, ammonia, acrylonitrile and formaldehyde) were established.

Toxicity index resulted to be 1.5, wherein the commonly accepted value is 2.

The halolgenhydric acids identification was carried out by titrating a 0.1 molar ammonium thiocyanate solution.

The halogenhydric acid amount thus obtained was expressed in milligrams of acid per gram of sample. As obviuos from the table, the halogenhydric acids were absent.

TABLE 3

| Gas | mg/g | Average values ppm.100g.m3 |
|---|---|---|
| carbon dioxide | 950 | 48.470 |
| carbon monoxide | 35 | 2.800 |
| hydrochloric acid | absent | |
| hydrobromic acid | absent | |
| hydrofluoric acid | absent | |
| hydrocyanic acid | 0.35 | 29 |
| nitric oxide (NO2) | 0.3 | 15 |
| sulfur dioxide | absent | |
| hydrogen sulfide | absent | |
| ammonia | absent | |
| acrylonitrile | absent | |
| formaldehyde | 0.6 | 43 |

e) Fumes opacity measurement
The test room comprised a cube with inner size of 3 + 0.03 m. On the front a tight door with glas porthole was provided. On the side walls two tight windows were arranged, said walls being alligned each other on side middle axis at a height of about 2.15 m and fit for the transmitter and light detector location.

Inside, the support for fire source vessel and test combustible material, a fan having a range of about 10 m3/min and a 1. 0 m high screen plate, were arranged. On the top, a device for evacuating the fumes was inserted. The light source comprised a quart-iodine lamp with tungsten filament and glas bulb having a luminous flux not lower than 2000 lumen acid nominal heat temperature of from 2800 to 3200 k. The light beam was set by a lens system, so as to produce an uniformly lightened, round area having a 1,5 + 0,1 m diameter inside the opposite wall.

The lamp supply voltage was stabilized on 0.1 V. The photodetector has a photopic type spectral response, and its output signal was continuously recorded by an electronic device. The light source and the photodetector were installed outside the room, near the two windows but avoiding a contact with the walls.

The flame source was obtained by burning 1000 cm3 of a 90% alcohol contained in a vessel having the followig size: lower base 210x110 mm, upper base 240x140 mm and height 80 mm.

The combustible material support comprised a stainless steel grid made with a 4 mm diameter wire, having 40 mmx 40 mm mesh, which was placed on the alcohol vessel, at about 100 mm from upper edge thereof. The support was provided with edges for containing the test material, defining a 240 mmx 140 mm area.

The coupon consisted of 300 + 5 g of combustible material sampled from the test article.

Before the test, a blank test was carried in order to pre-condition the test room by burning 1 dm3 alcohol.

On the test room the vessel containing the established alcohol amount and the support with the material that has to be tested, were than arranged. Both the port-holes were cleaned for having the greatest transparency and the photometric system was calibrated by stabilizing it at 100% of illuminance. Alcohol was then burned, and at the same time chronometer and the inner fan were started, the room tight door was closed and recording of the illuminance recorded by detector began.

During the test, illuminance was recorded and burning course and fumes evolution were noticed. At the same time, the alcohol flame temperatures and room inner temperature as well as the alcohol put out time were recorded. Test was considered terminated at the 40th minute.

For evaluating the optical density (Dm) the following formula was utilized:

$$Dm = \log_{10} Io/I$$

wherein: Io is illuminance in absence of smoke (100%) and
I is the measured illuminance (minimal or after 40 minutes).

In Table 4 the test results are listed, in which the maximal acceptance limit for Dm is 1.5.

TABLE 4

| Non toxic cable protecion | Material weight (g) | Burned material (g) | Optical density | | |
|---|---|---|---|---|---|
| | | | Max | | after 40 m |
| | | | Dm | m | Dm |
| | 300 | 300 | 0.19 | 19 | 0.18 |

## Claims

1. A pipe for protecting cables of every type and for the passage of industrial and waste waters, in particular for protecting cables installed on railway, tramway and underground carriages, characterized in that it is obtained from a thermoplastic composition comprising:
   from 20 to 70% by weight of an ethylene copolymer,
   from 30 to 80% by weight of an fire retardant and incombustible agent,
   from 0.1 to 1.5 % by weight of an antioxidant,
   from 0.05 to 1.0% by weight of an anti-aging agent,
   from 1 to 8% by weight of carbon black,
   from 0.05 to 1.2% by weight of promoter,
   from 1 to 10% by weight of plasticizer, and
   from 0.07 to 3% by weight of cumyl peroxide,
   wherein all the percentages are referred to the total weight composition.

2. A pipe according to claim 1, characterized in that the copolymer is an ethylene-vinyl acetate copolymer.

3. A pipe according to claim 1 and 2, characterized in that the fire retardant and incombustible agent is aluminium hydroxide.

4. Process for preparing a pipe for protecting cables and for the passage of industrial and waste waters as claimed in any one of claims 1 to 3, in which
   - the ingredients were charged in a mixer,
   - the blend was transferred in a calendar,
   - the foil thus obtained was wrapped round a mandrel,

   characterized in that the entire mixing and calendering process occurred ad a temperature lower than 120°C and for a period of time of from 1 to 5 minutes.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 104 984 (KABEL- UND METALLWERKE GUTEHOFFNUNGSHÜTTE) <br> * page 3, line 1 - line 10 * <br> * page 4, line 12 - page 5, line 23 * <br> --- | 1-2 | C08K3/22 <br> C08K5/14 |
| X | EP-A-0 332 773 (SUMITOMO) <br> * page 3, line 2 - line 32 * <br> --- | 1-3 | |
| X | EP-A-0 017 002 (BASF) <br> * page 3, line 16 - line 19 * <br> --- | 1-3 | |
| X | GB-A-1 095 141 (TECHNO-CHEMIE KESSLER UND CO) <br> * page 1, column 2, line 58 - line 72; figures 1,2 * <br> ----- | 4 | |
| | | | TECHNICAL FIELDS SEARCHED (Int. Cl.5 ) |
| | | | C08K <br> F16L <br> B29C |

The present search report has been drawn up for all claims

| Place of search | Date of completion of the search | Examiner |
|---|---|---|
| THE HAGUE | 26 MAY 1993 | SCHMIDT H.R. |

EPO FORM 1503 03.82 (P0401)